# EUROPEAN PATENT APPLICATION

(11) **EP 0 805 536 A1**
(43) Date of publication of application: **05.11.1997**
(21) Application number: 97302986.1
(22) Date of filing: 01.05.1997
(51) Int. Cl.: H02G 15/117, G02B 6/44

(54) **Cable enclosure**

(30) Priority: 01.05.1996 GB 9609005; 05.03.1997 GB 9704511
(71) Applicant: BOWTHORPE PLC, Crawley, West Sussex RH10 2RZ (GB)
(72) Inventor: Foss, Raymond Charles, Peverell, Plymouth, Devon, PL3 4NX (GB)
(74) Representative: Gibson, Stewart Harry

(57) **Abstract**

An enclosure for cable joint or termination devices comprises a base section (10) to receive those devices, one or more cable inlet ports (25) in at least one end wall of the base section, a plurality of cable outlet ports (36) in the bottom of the base section adjacent its opposite ends, and a lid section (12) fitted onto the base section.

## Description

The present invention relates to an enclosure for cable joints or terminations and more particularly to an enclosure for housing cable distribution or "tap" devices.

There are various applications in which cable distribution or tap devices are used, for example in cable television where such devices are used to distribute signals from primary cables to subscriber cables. These distribution or tap devices require sealed enclosures which are usually installed in an underground box or other location where access is limited. Known tap devices take a number of different forms, hitherto requiring different types of enclosure.

We have now devised an enclosure which can be used to house a variety of different distribution or tap devices or other cable joint or termination devices.

In accordance with the present invention, there is provided an enclosure for cable joint or termination devices, said enclosure comprising a base section to receive said devices, one or more cable inlet ports in at least one end wall of the base section, a plurality of cable outlet ports in the bottom of said base section adjacent its opposite ends, and a lid section fitted or for fitting onto said base section.

The arrangement of inlet and outlet ports enables use of the enclosure for a variety of applications, the enclosure housing different cable joint or termination devices for the different applications.

Preferably the rear wall of the base section is provided with means for mounting the enclosure to an upright surface, e.g. to the wall of an underground box with the bottom surface of the enclosure above the bottom of the underground box. This mounting means may comprise socket-like formations to engage over upwardly-projecting limbs of mounting brackets e.g. fixed to the wall of the underground box.

Preferably the lid section is hinged to the base section along the top of the rear wall of the latter. Preferably the arrangement is such that the lid section can be lifted and separated completely from the base section once it has been pivoted open through a predetermined angle. Preferably therefore, the lid section has one or more downwardly and outwardly curving projections on its rear edge, for engaging within corresponding slots formed in the upper edge of the rear wall of the base section.

Preferably the enclosure is divided into its base and lid sections by a plane which extends from a line adjacent the upper rear edge of the enclosure to a line adjacent the lower front edge of the enclosure. Accordingly, once the lid is opened, easy access is available to the devices which are housed within the enclosure.

Preferably the inlet ports comprise tubular projections on the outside of the end walls of the base section of the enclosure. The inlet ports are therefore suited to the use of a cable locking and sealing sleeve, as described in our UK patent No. 2,277,206, to lock the cable and seal it to the port. Thus, the cable end is passed into the enclosure through the port and then through the locking and sealing sleeve: then the cable is retracted in the outward direction to insert the tapered end of the sleeve through the port; this end of the sleeve, now projecting outwardly from the enclosure, is now pulled to pull the opposite, wider end into the tubular port and so lock the sleeve in position.

Preferably the enclosure base section has a pair of inlet ports in one or both of its opposite ends. Preferably the first of these inlet ports is positioned substantially centrally between the front and rear of the base section. Preferably the second of these inlet ports is offset towards the front.

Preferably the enclosure base section has an oval-section inlet port in at least one of its opposite ends. Preferably this is positioned adjacent the rear of the base section.

Preferably the outlet ports comprise tubular projections on the inside of the bottom or floor of the base section. The outlet ports are therefore suited to the use of cable locking and sealing sleeves as described in out UK patent No. 2,277,206, which are pulled upwardly into position.

Preferably the two sections of the enclosure are moulded from plastics material. Preferably the cable inlet and outlet ports are closed by membranes, which can be pressed out as and when required.

Preferably the outlet ports are arranged in two groups adjacent each of the opposite ends of the base section, one group being disposed adjacent the rear wall and the other group adjacent the front wall of the base section.

Often, access to the underside of the enclosure may be restricted, making it difficult to insert the end of a cable, together with its locking and sealing device, through a port in the bottom of the base section. We have now devised a procedure for overcoming this difficulty.

Thus, in accordance with the present invention, there is provided a method of installing a cable in a port in an enclosure, the method comprising passing a length of flexible tube outwardly through said port, passing said cable though a locking and sealing sleeve and then through said flexible tube from its outer end until the cable has passed through said port, withdrawing said flexible tube, and then pulling said cable inwardly to engage said sleeve within said port.

An embodiment of the present invention will now be described by way of example only and with reference to the accompanying drawings, in which:
FIGURE 1 is a plan view of an enclosure, in the form of a tap-box, in accordance with the present invention, shown with its lid removed;
FIGURE 2 is a section through the tap-box of Figure 1 along the line C-C with details of the input cable connections omitted;
FIGURE 3 is a section through the tap-box of Figure 1 along the line C-C showing details of the input cable connections but omitting other details of the enclosure;
FIGURE 4 is a section through the tap-box of Figure 1 along the line A-A; and
FIGURE 5 is a section through the tap-box of Figure 1 along the line B-B.

Referring to the drawings, there is shown a rectangular tap-box which is divided into a lower or base section 10 and an upper or lid section 12 by a plane extending diagonally from a horizontal line adjacent the upper rear edge of the box to a horizontal line adjacent the lower front edge of the box. Two rectangular-section hollow projections 14 are formed on the outside of the rear wall of the base section: these projections are open at their lower ends so that they can engage over upwardly-projecting limbs of respective support brackets provided in an enclosure, to enable the tap-box to be mounted within that enclosure above the bottom surface of the latter.

The lid has a number of curved projections 16 on its lower rear edge, for engaging with corresponding slots 18 on the upper rear edge of the base, so that the lid may pivot relative to the base: further, once the lid has pivoted through a certain angle, the lid may be fully separated from the base, thereby allowing unrestricted access to the interior of the base.

The lid is secured in its closed position by screws 20 which extend through its peripheral flange and into a corresponding flange of the base: these fixing points are provided at locations spaced apart along the front and sides of the box. The peripheral flange of the lid incorporates a seal 22.

The base 10 of the tap-box is formed with two outwardly-projecting, tubular inlet ports 24,25 in each of its opposite end walls, for receiving one or more primary distribution cables. In the embodiment illustrated, the opposed inlet apertures 25, which are offset towards the front of the box, have been used to receive input cables 26, each cable being secured in place and having its inlet port sealed by means of an elastomeric cable locking and sealing sleeve 28 of the type disclosed in our UK patent application No. 2,277,206. Each of the input cables 26 connects to one of two taps or distributors 30 which are positioned and interconnected side-by-side within the interior of the box. The two taps 30 are inclined upwards towards the front of the box so that their connectors 32 to the cables 26 are accessible when the lid of the box is removed.

A plurality of secondary or output cables 34 are connected to outlet terminals on the tops of the taps 30 and extend out of the box through respective inwardly-projecting outlet ports 36,38 formed in the floor of the base adjacent each of its opposite ends. Thus, there is a group of sixteen outlet ports 36 at the rear of the base and a group of eight outlet ports 38 adjacent the front of the base, at each of its ends.

Due to the limited bend radius of the output cables 34, each output cable 34 is routed through an outlet port adjacent the opposite end of the base from its respective tap.

Each output cable 34 is secured in place and has its outlet port sealed by means of an elastomeric cable locking and sealing sleeve 40, as described in our UK patent No. 2,277,206.

The lid and base of the tap-box are moulded from plastics material, with all inlet and outlet ports closed by a membrane. Individual ports can be used, when required, by pressing out their respective membranes.

In order to connect a subscriber using the tap-box which has been described, an appropriate outlet terminal of one of the taps 30 and a corresponding outlet port are first chosen. A flexible tube is then passed downwardly through the chosen outlet port, and its outer end is located and flexed round to a convenient location to the front or beyond one end of the tap-box. A cable 34, having a sealing and locking sleeve 40 fitted adjacent its end, is then fed into the outer end of the flexible tube and advanced until its end emerges from the opposite end of the tube, within the tap-box. the tube is then pulled upwardly and from the cable, after which the cable is pulled upwardly until its sleeve 40 has entered the outlet port and its leading end emerged from the inner end of that outlet port: the sleeve 40 is then gripped and pulled upwardly to engage it within the outlet port. This procedure avoids the need for any more than limited access to the underside of the base of the tap-box.

It will be appreciated that, whilst the tap-box has been described for housing a particular form and arrangement of cable taps, the same tap-box may instead be used to house cable junctions or distributors of a variety of different forms. The cables may comprise coaxial cables, copper (wire conductor) cables, combined coaxial and copper cables, or optical fibre cables for example. The primary and output cables may be of the same or different types. For example, the primary cable may be an optical fibre cable and the output cables coaxial cables (the cables being connected to an optoelectrical converter within the tap-box): as another example, the box may house a fibre distributor feeding fibre direct to subscribers using multiple cable drops.

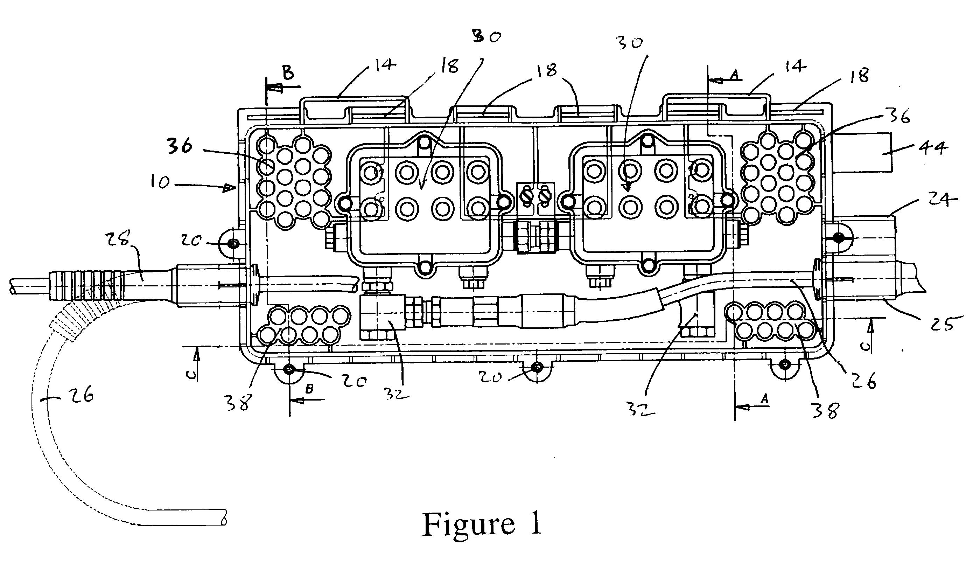

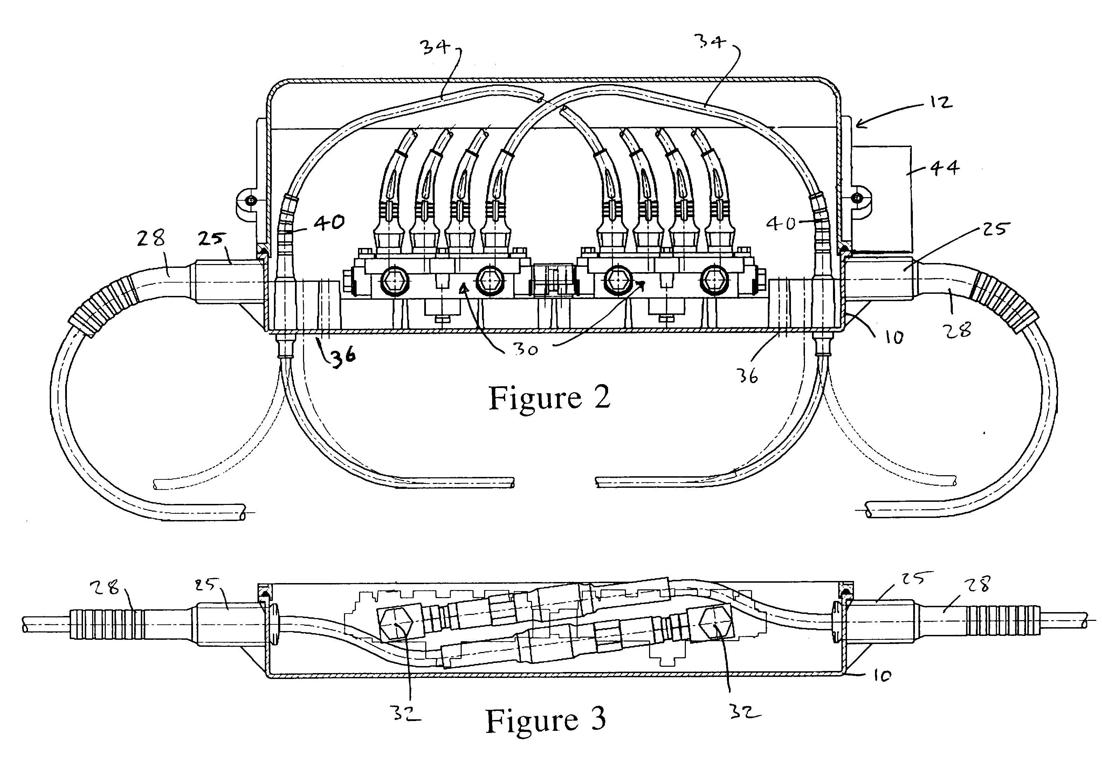

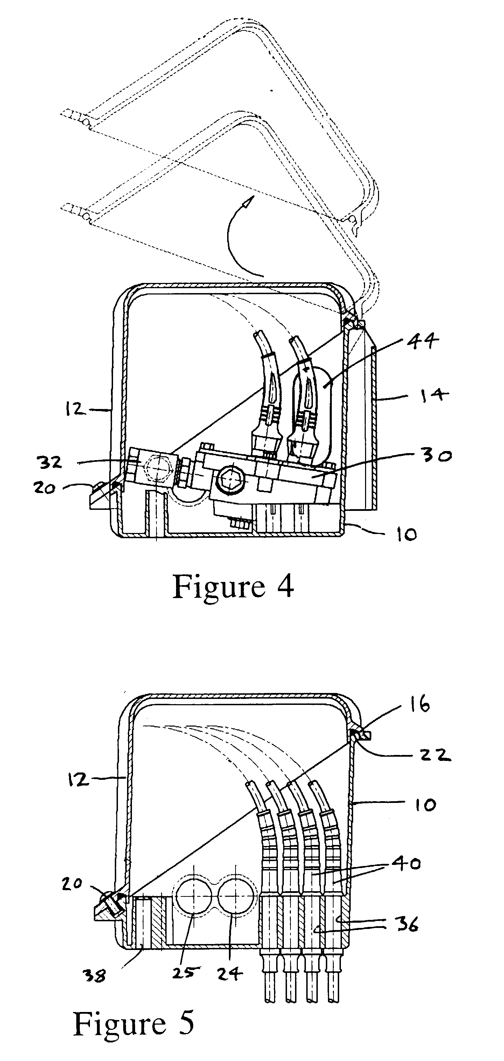

Either or both ends of the base section 10 of the box may be formed with an outwardly-projecting, tubular inlet port of oval cross-section, shown at 44 in Figures 1, 2 and 4. This port is positioned adjacent the rear of the base section and is oriented with its major axis vertical. The port is also formed with a membrane which can be pressed out when the port is required for use.

## Claims

1. An enclosure for cable joint or termination devices, said enclosure comprising a base section to receive said devices, one or more cable inlet ports in at least one end wall of the base section, a plurality of cable outlet ports in the bottom of said base section adjacent its opposite ends, and a lid section fitted or for fitting onto said base section.

2. An enclosure as claimed in claim 1, in which a rear wall of the base section is provided with means for mounting the enclosure to an upright surface.

3. An enclosure as claimed in claim 2, in which said mounting means comprise socket-like formations to engage over upwardly-projecting limbs of mounting brackets provided on upright surfaces.

4. An enclosure as claimed in claim 2, in which said mounting means comprise downwardly-projecting elements to engage within socket-like formations provided on said upright surface.

5. An enclosure as claimed in any preceding claim, in which said lid section is hinged to said base section along the top of a rear wall of the latter.

6. An enclosure as claimed in claim 5, in which said lid section is arranged to be lifted and separated completely from said base section once it has been pivoted open through a predetermined angle.

7. An enclosure as claimed in claim 6, in which said lid section comprises one or more downwardly and outwardly curved projections on its rear edge, engaged or for engaging within corresponding slots formed in the upper edge of the rear wall of the base section.

8. An enclosure as claimed in any preceding claim, which is divided into its said base and lid sections by a plane which extends from a line adjacent the upper rear edge of the enclosure to a line adjacent the lower front edge of the enclosure.

9. An enclosure as claimed in any preceding claim, in which said inlet ports comprise tubular projections on the outside of the end walls of said base section.

10. An enclosure as claimed in claim 9, in which said base section has a pair of said inlet ports in one or both of its opposite ends.

11. An enclosure as claimed in claim 10, in which a first of said pair of inlet ports is positioned substantially centrally between the front and rear of said base section.

12. An enclosure as claimed in claim 11, in which the second inlet port of said pair is offset towards the front of said base section.

13. An enclosure as claimed in any preceding claim, in which said inlet ports comprise a generally oval-section port at one or both ends of said base section.

14. An enclosure as claimed in any preceding claim, in which said outlet ports comprise tubular projections on the inside of the bottom floor of said base section.

15. A method of installing a cable in a port in an enclosure, the method comprising passing a length of flexible tube outwardly through said port, passing said cable through a locking and sealing sleeve and then through said flexible tube from its outer end until the cable has passed through said port, withdrawing said flexible tube, and then pulling said cable inwardly to engage said sleeve within said port.
